# EUROPEAN PATENT APPLICATION

(11) **EP 1 394 876 A1**
(43) Date of publication of application: **03.03.2004**
(21) Application number: 02714547.3
(22) Date of filing: 08.04.2002
(51) Int. Cl.: H01M 4/58, H01M 10/40

(54) **LITHIUM SECONDARY BATTERY-USE ACTIVE MATTER**

(30) Priority: 10.04.2001 JP 2001111792
(71) Applicant: Mitsui Mining & Smelting Co., Ltd., Tokyo 141-8584 (JP)
(72) Inventor: NUMATA, Kouichi, MITSUI MINING & SMELTING CO., LTD, Takehara-shi, Hiroshima 725-0025 (JP); MAKIZOE, Sumihiko, MITSUI MINING & SMELTING CO LTD, Takehara-shi, Hiroshima 725-00 (JP); ISHIDA, Shintaro, MITSUI MINING & SMELTING CO. LTD, Takehara-shi, Hiroshima 725-002 (JP)
(74) Representative: Pätzold, Herbert, Dr.-Ing.
(86) International application number: PCT/JP2002/003505
(87) International publication number: WO 2002/084765

(57) **Abstract**

An active substance for a lithium secondary battery including a material being capable of electrochemically inserting and desorbing lithium and having a metallic iron grade below 5 ppm. The metallic iron grade below 5 ppm maintains the capacity-maintaining rate after the specified number of cycles in a higher value range to elevate the performances of the lithium secondary battery.

## Description

### Technical Field

The present invention relates to an active substance for a lithium secondary battery, and more particularly to the active substance for the lithium secondary battery cable of maintaining the higher capacity when used in the lithium secondary battery.

### Background Art

The recent rapid progress of personal computers and telephones into cordless or portable ones elevates the demands for secondary batteries used as driving power sources therefor. Among them, a lithium secondary battery is especially expected because of its compactness and higher energy density. The lithium secondary battery is one of the important devices used in portable electronic devices. The positive electrode material of the lithium secondary battery satisfying the above requests includes lithium cobaltate (LiCoO₂), lithium nickelate (NiCoO₂) and lithium manganate (MnCoO₂), and the negative electrode material includes carbon.

However, the performances of the batteries fabricated by using these positive electrode material and negative electrode material are known to be largely different from one another depending on the processes of fabrication. As a result of extensive research, the present inventors have reached to the present invention after the finding that the existence of metallic iron affects the cycle life of the lithium secondary battery.

### Disclosure of Invention

An object of the present invention is to provide an active substance for a lithium secondary battery having a higher capacity-maintaining rate when used in the lithium secondary battery, and the lithium secondary battery using the active substance for the lithium secondary battery.

The present invention is an active substance for a lithium secondary battery including a material being capable of electrochemically inserting and desorbing lithium and having a metallic iron grade below 5 ppm.

The material includes (1) carbon or (2) LiₓMO₂ (M is at least one metal selected from the group consisting of Mn, Fe, Co, Ni, Mg and Al, and x is 0.95<x<1.05) having a layered crystal structure, and (3) LiyM₂O₄ (M is at least one metal selected from the group consisting of Mn, Fe, Co, Ni, Mg and Al, and x is 0.98<x<1.10) having a spinel crystal structure.

The lithium secondary battery formed by using the active substance for the lithium secondary battery having these materials has a higher capacity-maintaining rate.

The metallic iron of the present invention includes metal iron and an iron alloy, and the grade (content) of the metallic iron is made to be below 5 ppm, preferably below 4 ppm and more preferably below 1 ppm in the present invention. The grade of 5 ppm or more makes the length of the cycle life insufficient, and the use in the secondary battery is impractical. The grade below 5 ppm, especially below 1 ppm, provides the satisfactory capacity-maintaining rate. The lower limit of the grade of the metallic iron is zero in which the most excellent capacity-maintaining rate can be obtained.

The combination of various elements is possible for the positive electrode material and the negative electrode material acting as the active substance. The influence of the iron grade was observed in connection with the capacity-maintaining rates of the above (1) carbon, (2) LiₓMO₂ and (3) Li_{y}M₂O₄.

Graphite is suitably used as the carbon acting as the active substance.

The above LiₓMO₂ can be obtained by mixing a lithium raw material and a compound including at least one metal selected from manganese, iron, cobalt, nickel magnesium and aluminum, for example, their oxides, hydroxides or carbonates, followed by sintering. The lithium raw material includes lithium carbonate (LiCO₃), lithium nitrate (LiNO₃) and lithium hydroxide (LiOH). The "x" value of the LiₓMO₂ is desirably 0.95<x<1.05. The "x" value over 1.05 is likely to decrease the initial capacity though the capacity-maintaining rate is elevated. The "x" value below 0.95 has a tendency of performing the insufficient improvement of the battery performances at a higher temperature.

The above Li_{y}M₂O₄ can be obtained by mixing a lithium raw material and a compound including at least one metal selected from manganese, iron, cobalt, nickel magnesium and aluminum, for example, their oxides, hydroxides or carbonates, followed by sintering. The lithium raw material includes lithium carbonate (LiCO₃), lithium nitrate (LiNO₃) and lithium hydroxide (LiOH). The "y" value of the Li_{y}M₂O₄ is desirably 0.98<x<1.10. The "y" value over 1.10 is likely to decrease the initial capacity though the capacity-maintaining rate is elevated. The "y" value below 0.98 has a tendency of performing the insufficient improvement of the battery performances at a higher temperature.

The pulverization of the material is preferably conducted before or after the mixing of the raw materials during the fabrication. The material weighed and mixed can be used without further treatment or after granulation. The method of the granulation may be a wet process or a dry process, and extrusion granulation, nutation granulation, fluidized granulation, mixing granulation, spray-dry granulation, pressing granulation and flake granulation using a roller may be also used.

The raw materials thus obtained are put into, for example, a sintering furnace and sintered at 600 to 1000 °C. When the compound is a manganese compound, lithium manganate having a spinel structure can be obtained. In order to obtain the lithium manganate having the spinel structure and the single phase, the sintering at about 600 °C is sufficient. Since, however, the grains are not grown in the lower temperature sintering, the sintering temperature is desirably at 750 °C or more, and preferably at 850 °C or more. As the sintering furnace used herein, a rotary kiln and a still standing furnace are exemplified. The length of time of the sintering is an hour or more, and preferably 5 to 20 hours.

The positive electrode mixed material is prepared by mixing, for example, the positive electrode material, a conductive material such as carbon black, and a bonding agent such as a Teflon (trademark) binder in the present invention. A material such as lithium and carbon capable of inserting and desorbing lithium is used as the negative electrode. Non-aqueous electrolyte prepared by dissolving a lithium salt such as lithium hexa-fluorinated phosphate (LiPF₆) into a mixed solvent of ethylene carbonate-dimethylcarbonate is used. A preferable lithium secondary battery is formed by using the positive electrode material, the negative electrode material and the non-aqueous electrolyte. However, the materials are not restricted thereto.

### Brief Description of Drawings

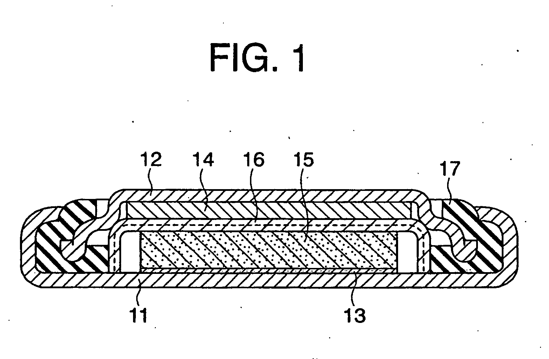

Fig.1 is a cross sectional view showing a lithium secondary battery used in an Example.

### Best Mode for Implementing Invention

Although Examples of the active substance for the lithium secondary battery in accordance with the present will be described, the present invention shall not be deemed to be restricted thereto. Examples 1 to 3 and Comparative Example 1 use carbon as the active substance, Examples 7 to 9 use LiₓMO₂ having a layered crystal structure as the active substance, and Examples 4 to 6 and 10 to 15 and Comparative Examples 2 to 5 use Li_{y}M₂O₄ as the active substance.

### [Example 1]

Commercially available graphite having a center particle size of 20 µm was pulverized such that the center particle size was adjusted to be 10 µm by using a ball mill having a plenty of alumina balls accommodated in a polypropylene vessel (hereinafter simply referred to as "ball mill"). The metallic iron grade in the graphite was measured in accordance with the following method.

After 5 g of sample graphite was added to 100 ml of methanol solution containing 2 % in volume of bromine, the solution was shaken for 5 minutes at ordinary temperature to dissolve the metallic iron into the solution. After the solution was centrifugally recovered, the iron concentration in the solution was measured by using an atomic absorption method, and the metallic iron grade in the sample was calculated.

Then, after the graphite material was sufficiently mixed with a Teflon binder, the mixture was press-molded to provide a disc-shaped positive electrode mixed material. A 2016 type coin battery shown in Fig.1 was formed by using the materials including the positive electrode mixed material, and lithium as a counter-electrode.

As shown in Fig.1, a current collector 13 made of stainless steel having a resistance to organic electrolyte is spot-welded to the interior of a positive electrode casing 11 made of the same stainless steel. A positive electrode 15 made of the positive electrode mixed material is mounted under pressure on the current collector 13. A separator 16 made of porous polypropylene resin impregnated with an electrolyte is positioned on the top surface of the positive electrode 15. A sealing plate 12 having a negative electrode 14 on the bottom surface thereof is inserted into an opening of the positive electrode casing 11 by using a polypropylene gasket 17 sandwiching the sealing plate 12, thereby sealing the battery. The sealing plate 12 also acting as a negative electrode terminal is made of stainless steel similarly to the positive electrode casing.

The diameter of the battery was 20 mm, and the total height of the battery was 1.6 mm. The electrolyte was prepared by dissolving lithium hexa-fluorinated phosphate, at a rate of 1 mole/liter, into a mixed solvent of ethylene carbonate and 1,3-dimethoxyethane in an equi-volume ratio.

The conditions of charging and discharging were as follows. The voltage range was 0.1 to 1.5 V in an IC rate, and the temperature was 45°C. After the repetition of 25 times of the charge and discharge cycles, the capacity-maintaining rate with respect to the initial discharge capacity was evaluated.

The metallic iron grade before the pulverization was 0.5 ppm. As shown in Table 1, the metallic iron grade after the pulverization and the capacity-maintaining rate after 25 cycles were 0.6 ppm and 96 %, respectively.

**Table 1**

| | Grade of Metallic Iron | Capacity-Maintaining Rate |
|---|---|---|
| Example 1 | 0.6 ppm | 96 % |
| Example 2 | 0.5 ppm | 98 % |
| Example 3 | 4.2 ppm | 95 % |
| Example 4 | 0.3 ppm | 97 % |
| Example 5 | 0.4 ppm | 98 % |
| Example 6 | 3.6 ppm | 94 % |
| Example 7 | 0.8 ppm | 96 % |
| Example 8 | 0.7 ppm | 96 % |
| Example 9 | 4.5 ppm | 92 % |
| Example 10 | 0.8 ppm | 98 % |
| Example 11 | 0.9 ppm | 97 % |
| Example 12 | 4.8 ppm | 91 % |
| Example 13 | 0.8 ppm | 99 % |
| Example 14 | 0.7 ppm | 98 % |
| Example 15 | 4.3 ppm | 93 % |
| Comp. Example 1 | 6.5 ppm | 88 % |
| Comp. Example 2 | 8.0 ppm | 87 % |
| Comp. Example 3 | 8.5 ppm | 92 % |
| Comp. Example 4 | 9.5 ppm | 91 % |
| Comp. Example 5 | 9.0 ppm | 85 % |

### [Example 2]

The commercially available graphite having the center particle size of 20 µm used in Example 1 was pulverized such that the center particle size was adjusted to be 5 µm by using the ball mill. The metallic iron grade of the pulverized graphite and the charge and discharge characteristics were measured similarly to Example 1. As shown in Table 1, the metallic iron grade after the pulverization and the capacity-maintaining rate after 25 cycles were 0.5 ppm and 98 %, respectively.

### [Example 3]

The commercially available graphite having the center particle size of 20 µm used in Example 1 was pulverized such that the center particle size was adjusted to be 10 µm by using a pin-mill made of iron. The metallic iron grade of the pulverized graphite and the charge and discharge characteristics were measured similarly to Example 1. As shown in Table 1, the metallic iron grade after the pulverization and the capacity-maintaining rate after 25 cycles were 4.2 ppm and 95 %, respectively.

### [Comparative Example 1]

The commercially available graphite having the center particle size of 20 µm used in Example 1 was pulverized such that the center particle size was adjusted to be 5 µm by using the pin-mill made of iron. The metallic iron grade of the pulverized graphite and the charge and discharge characteristics were measured similarly to Example 1. As shown in Table 1, the metallic iron grade after the pulverization and the capacity-maintaining rate after 25 cycles were 6.5 ppm and 88 %, respectively.

### [Example 4]

After cobalt hydroxide and lithium hydroxide having a center particle size of 25 µm were weighed and mixed in a ratio of Co:Li=1:1, the mixture was sintered at 900 °C for 20 hours under ambient atmosphere. The center particle size of lithium cobaltate (LiCoO₂) thus obtained was 22 µm, and the metallic iron grade measured in accordance with the method of Example 1 was 0.3 ppm.

The lithium cobaltate was pulverized such that the center particle size was adjusted to be about 10 µm by using the ball mill of Example 1. The metallic iron grade of the material thus obtained was measured similarly to Example 1. The charge and discharge characteristics were also measured similarly to Example 1 by maintaining the voltage range from 3.0 to 4.3 V. As shown in Table 1, the metallic iron grade after the pulverization and the capacity-maintaining rate after 25 cycles were 0.3 ppm and 97 %, respectively.

### [Example 5]

The lithium cobaltate synthesized in Example 4 having the center particle size of 22 µm was pulverized such that the center particle size was adjusted to be about 5 µm by using the ball mill. The metallic iron grade of the pulverized material and the charge and discharge characteristics were measured similarly to Examples 1 and 4. As shown in Table 1, the metallic iron grade after the pulverization and the capacity-maintaining rate after 25 cycles were 0.4 ppm and 98 %, respectively.

### [Example 6]

The lithium cobaltate synthesized in Example 4 having the center particle size of 22 µm was pulverized such that the center particle size was adjusted to be about 10 µm by using the ball mill. The metallic iron grade of the pulverized material and the charge and discharge characteristics were measured similarly to Examples 1 and 4. As shown in Table 1, the metallic iron grade after the pulverization and the capacity-maintaining rate after 25 cycles were 3.6 ppm and 94 %, respectively.

### [Comparative Example 2]

The lithium cobaltate synthesized in Example 4 having the center particle size of 22 µm was pulverized such that the center particle size was adjusted to be about 5 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 8.0 ppm and 87 %, respectively.

### [Example 4]

After cobalt hydroxide and lithium hydroxide having a center particle size of 25 µm were weighed and mixed in a ratio of Co:Li=1:1, the mixture was sintered at 900 °C for 20 hours under ambient atmosphere. The center particle size of lithium cobaltate (LiCoO₂) thus obtained was 22 µm, and the metallic iron grade measured in accordance with the method of Example 1 was 0.3 ppm.

The lithium cobaltate was pulverized such that the center particle size was adjusted to be about 10 µm by using the ball mill of Example 1. The metallic iron grade of the material thus obtained was measured similarly to Example 1. The charge and discharge characteristics were also measured similarly to Example 1 by maintaining the voltage range from 3.0 to 4.3 V. As shown in Table 1, the metallic iron grade after the pulverization and the capacity-maintaining rate after 25 cycles were 0.3 ppm and 97 %, respectively.

### [Example 5]

The lithium cobaltate synthesized in Example 4 having the center particle size of 22 µm was pulverized such that the center particle size was adjusted to be about 5 µm by using the ball mill. The metallic iron grade of the pulverized material and the charge and discharge characteristics were measured similarly to Examples 1 and 4. As shown in Table 1, the metallic iron grade after the pulverization and the capacity-maintaining rate after 25 cycles were 0.4 ppm and 98 %, respectively.

### [Example 7]

After manganese-nickel hydroxide (Mn:Ni=1:1) prepared by a co-precipitation method having a center particle size of 21 µm and lithium hydroxide were weighed and mixed in a ratio of Li: (Mn+Ni) =1:1, the mixture was sintered at 1000 °C for 20 hours under ambient atmosphere. The center particle size of lithium manganese-nickelate (LiMn_{0.5}Ni_{0.5}O₂) thus obtained was 23 µm, and the metallic iron grade measured similarly to the method of Example 1 was 0.6 ppm.

The lithium manganese-nickelate was pulverized such that the center particle size was adjusted to be about 10 µm by using the ball mill. The metallic iron grade of the pulverized material and the charge and discharge characteristics were measured similarly to the methods of Examples 1 and 4. As shown in Table 1, the metallic iron grade after the pulverization and the capacity-maintaining rate after 25 cycles were 0.8 ppm and 96 %, respectively.

### [Example 8]

The lithium manganese-nickelate synthesized in Example 7 having the center particle size of 23 µm was pulverized such that the center particle size was adjusted to be about 5 µm by using the ball mill. The metallic iron grade of the pulverized material and the charge and discharge characteristics were measured similarly to Examples 1 and 4. As shown in Table 1, the metallic iron grade after the pulverization and the capacity-maintaining rate after 25 cycles were 0.7 ppm and 96 %, respectively.

### [Example 9]

The lithium manganese-nickelate synthesized in Example 7 having the center particle size of 23 µm was pulverized such that the center particle size was adjusted to be about 10 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 4.5 ppm and 92 %, respectively.

### [Comparative Example 3]

The lithium manganese-nickelate synthesized in Example 4 having the center particle size of 22 µm was pulverized such that the center particle size was adjusted to be about 5 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 8.5 ppm and 92 %, respectively.

### [Example 10]

After manganese dioxide prepared by electrolysis and lithium carbonate having a center particle size of 23 µm were weighed and mixed in a ratio of Li:Mn=1.1:1.9, the mixture was sintered at 900 °C for 20 hours under ambient atmosphere. The center particle size of lithium manganate (Li_{1.1}Mn_{1.9}O₄) having a spinel structure thus obtained was 23 µm, and the metallic iron grade measured similarly to the method of Example 1 was 0.8 ppm.

The lithium manganate having the spinel structure was pulverized such that the center particle size was adjusted to be about 10 µm by using the ball mill. The metallic iron grade of the pulverized material and the charge and discharge characteristics were also measured similarly to Examples 1 and 4. As shown in Table 1, the metallic iron grade after the pulverization and the capacity-maintaining rate after 25 cycles were 0.8 ppm and 98 %, respectively.

### [Example 11]

The lithium manganate having the spinel structure synthesized in Example 10 having the center particle size of 23 µm was pulverized such that the center particle size was adjusted to be about 5 µm by using the ball mill. The metallic iron grade of the pulverized material and the charge and discharge characteristics were measured similarly to Examples 1 and 4. As shown in Table 1, the metallic iron grade after the pulverization and the capacity-maintaining rate after 25 cycles were 0.9 ppm and 87 %, respectively.

### [Example 12]

The lithium manganate having the spinel structure synthesized in Example 10 having the center particle size of 23 µm was pulverized such that the center particle size was adjusted to be about 10 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 4.8 ppm and 91 %, respectively.

### [Comparative Example 4]

The lithium manganate having the spinel structure synthesized in Example 10 having the center particle size of 22 µm was pulverized such that the center particle size was adjusted to be about 5 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 9.5 ppm and 91 %, respectively.

### [Example 13]

After manganese dioxide prepared by electrolysis, magnesium oxide and lithium carbonate having a center particle size of 23 µm were weighed and mixed in a ratio of Li:Mn:Mg=1.07:1.89:0.04, the mixture was sintered at 900 °C for 20 hours under ambient atmosphere. The center particle size of obtained lithium manganate (Li_{1.07}Mn_{1.89}Mg_{0.04}O₄) having a spinel structure replaced with magnesium was 22 µm, and the metallic iron grade measured similarly to the method of Example 1 was 0.8 ppm.

The lithium manganate having the spinel structure replaced with the magnesium was pulverized such that the center particle size was adjusted to be about 10 µm by using the ball mill. The metallic iron grade of the material and the charge and discharge characteristics were also measured similarly to Examples 1 and 4. As shown in Table 1, the metallic iron grade after the pulverization and the capacity-maintaining rate after 25 cycles were 0.8 ppm and 99 %, respectively.

### [Example 14]

The lithium manganate having the spinel structure replaced with the magnesium synthesized in Example 13 having the center particle size of 22 µm was pulverized such that the center particle size was adjusted to be about 5 µm by using the ball mill. The metallic iron grade of the pulverized material and the charge and discharge characteristics were measured similarly to Examples 1 and 4. As shown in Table 1, the metallic iron grade after the pulverization and the capacity-maintaining rate after 25 cycles were 0.7 ppm and 98 %, respectively.

### [Example 15]

The lithium manganate having the spinel structure replaced with the magnesium synthesized in Example 13 having the center particle size of 22 µm was pulverized such that the center particle size was adjusted to be about 10 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 4.3 ppm and 93 %, respectively.

### [Comparative Example 5]

The lithium manganese-nickelate synthesized in Example 13 having the center particle size of 22 µm was pulverized such that the center particle size was adjusted to be about 5 µm by using the pin mill made of iron. The metallic iron grade of the pulverized material and the charge and discharge characteristics were measured similarly to Examples 1 and 4. As shown in Table 1, the metallic iron grade after the pulverization and the capacity-maintaining rate after 25 cycles were 9.0 ppm and 85 %, respectively.

While the use of Co as "M" of LiₓMO₂ was exemplified in Examples 7 to 9, similar effects could be obtained with respect to Mn, Fe, Ni, Mg and Al other than Co. While the use of Mg as "M" of LiyM₂O₄ was exemplified in Examples 4 to 6 and 10 to 15, similar effects could be obtained with respect to Mn, Fe, Ni, Co and Al other than Mg.

As apparent from the foregoing description, the use of the pin mill made of the iron as the mill for pulverizing sometimes increased the metallic iron grade in the respective materials to 5 ppm or more (Comparative Examples 1 to 5), and the highest capacity-maintaining rate after 25 cycles is 92 %. On the other hand, in all the cases in which the ball mill was used and in part of the cases in which the pin mill made of the iron was used (Examples 3, 9, 12 and 15), the metallic iron grade in the respective materials was suppressed to below 5 ppm, and the capacity-maintaining rates after 25 cycles are maintained in the higher range between 99 % at the maximum and 91 % at the minimum.

## Claims

1. An active substance for a lithium secondary battery **characterized by** comprising a material being capable of electrochemically inserting and desorbing lithium and having a metallic iron grade below 5 ppm.

2. The active substance for the lithium secondary battery as defined in claim 1, wherein the metallic iron grade is below 4 ppm.

3. The active substance for the lithium secondary battery as defined in claim 1, wherein the material is carbon.

4. The active substance for the lithium secondary battery as defined in claim 1, wherein the material is LiₓMO₂ (M is at least one metal selected from the group consisting of Mn, Fe, Co, Ni, Mg and Al, and x is 0.95<x<1.05) having a layered crystal structure.

5. The active substance for the lithium secondary battery as defined in claim 1, wherein the material is LiyM₂O₄ (M is at least one metal selected from the group consisting of Mn, Fe, Co, Ni, Mg and Al, and x is 0.98<x<1.10) having a spinel crystal structure.

6. A lithium secondary battery **characterized by** comprising the active substance for the lithium secondary battery as defined in any one of claims 1 to 5.
